# DEMANDE DE BREVET EUROPEEN

(11) **EP 2 395 422 A1**
(43) Date de publication de la demande: **14.12.2011**
(21) Numéro de dépôt: 11167199.6
(22) Date de dépôt: 24.05.2011
(51) Int. Cl.: G06F 3/12, H04N 1/00, H04L 29/12, H04L 29/06

(54) **Service d'impression ou de numérisation pour téléphone mobile**

(30) Priorité: 08.06.2010 FR 1054484
(71) Demandeur: SAGEMCOM DOCUMENTS SAS, 92500 Rueil Malmaison (FR)
(72) Inventeur: Sartori, David, 92500, RUEIL MALMAISON (FR); Sabatier, Pierre, 92500, RUEIL MALMAISON (FR)
(74) Mandataire: Maillet, Alain

(57) **Abrégé**

La présente invention concerne le domaine des systèmes d'impression de documents depuis un terminal mobile, typiquement un téléphone mobile.

Ce service se compose d'un serveur constitué de deux modules fonctionnels. Un premier module d'impression gère un réseau privé virtuel d'imprimantes et/ou de dispositifs comportant une fonction de lecture de document, accessibles via le service. Ces imprimantes se connectent à ce module en utilisant le réseau privé virtuel et communiquent avec le module d'impression. Un second module fonctionnel offre un service WEB d'impression aux terminaux mobiles. Le terminal mobile se connecte au module WEB sur lequel il poste le fichier qu'il veut imprimer. Le fichier est alors imprimé par le module d'impression sur une imprimante choisie. Le terminal mobile se connecte aussi au module WEB pour recevoir un document lu par un dispositif choisi comportant une fonction de lecture de document.

## Description

La présente invention concerne le domaine des systèmes d'impression de documents depuis un terminal mobile, typiquement un téléphone mobile.

De manière classique, un terminal informatique, pour pouvoir imprimer un document, doit être connecté à une imprimante. Cette connexion peut être locale dans le cas d'une imprimante directement connectée au terminal ou bien distante au travers d'un réseau de communication auquel sont connectés le terminal et l'imprimante. Dans les deux cas, un pilote spécifique de l'imprimante doit être installé sur le terminal. Ceci est possible, car l'environnement dudit terminal est généralement connu et stable et que le terminal est connecté soit directement à l'imprimante en local soit via un réseau de communication local.

Dans le cas d'un terminal mobile, la connexion locale à une imprimante n'est généralement pas possible, les terminaux mobiles ne comportant pas les connecteurs appropriés. D'autre part, la connexion du terminal mobile au réseau local d'une entreprise est souvent interdite pour des raisons de sécurité. De plus, les systèmes d'exploitation utilisés sur ces terminaux ne permettent généralement pas l'installation de pilotes d'impression.

L'invention vise à résoudre les problèmes précédents par un service d'impression en ligne. Ce service se compose d'un serveur constitué de deux modules fonctionnels. Un premier module d'impression gère un réseau privé virtuel d'imprimantes accessibles via le service. Ces imprimantes se connectent à ce module en utilisant le réseau privé virtuel et communiquent avec le module en utilisant avantageusement le protocole UPnP (Universal Plug and Play en anglais). Un second module fonctionnel offre un service WEB d'impression aux terminaux mobiles en utilisant les technologies WEB standard telles que HTTP (Hyper Text Transfer Protocol en anglais). Le terminal mobile se connecte au module WEB sur lequel il poste le fichier qu'il veut imprimer. Le fichier est alors imprimé par le module d'impression sur l'imprimante choisie.

L'invention concerne un serveur d'impression accessible au travers d'un réseau de communication qui comporte un serveur de tunnel sécurisé permettant à des imprimantes d'établir un tunnel de communication sécurisé avec ledit serveur d'impression ; des moyens de recevoir de la part d'un terminal mobile se connectant audit serveur, d'une part un fichier source à imprimer et d'autre part un identifiant de l'imprimante cible choisie pour l'impression ; des moyens pour transformer le fichier source reçu en un fichier imprimable correspondant dans un format d'impression indépendant de l'imprimante cible et des moyens d'envoyer ledit fichier imprimable à une imprimante cible désignée au travers d'un tunnel sécurisé.

Selon un mode de réalisation particulier de l'invention, les moyens de recevoir le fichier source et l'identifiant de l'imprimante cible sont constitués d'un serveur WEB.

Selon un mode de réalisation particulier de l'invention, les moyens pour transformer le fichier source sont constitués d'une pluralité d'applications aptes à ouvrir et imprimer une pluralité de types de fichiers sources.

Selon un mode de réalisation particulier de l'invention, les moyens de recevoir le fichier source et l'identifiant de l'imprimante cible et les moyens de transformer le fichier source reçu en un fichier imprimable correspondant dans un format d'impression indépendant de l'imprimante cible sont séparés par un pare-feu.

Selon un mode de réalisation particulier de l'invention, le serveur comporte en outre des moyens de recevoir d'une imprimante une image correspondant à un document lu par l'imprimante ; des moyens d'encapsuler les données reçues pour constituer un fichier image et des moyens de transmettre ce fichier image à un terminal mobile en réponse à une requête.

Selon un mode de réalisation particulier de l'invention, les imprimantes étant conformes à la norme UPnP, l'identifiant de l'imprimante est l'identifiant unique d'appareil selon UPnP.

L'invention concerne également une imprimante pouvant être connectée à un réseau de communication, qui comporte des moyens d'établir un tunnel sécurisé avec un serveur d'impression.

Selon un mode de réalisation particulier de l'invention, l'établissement dudit tunnel sécurisé est réalisé automatiquement au démarrage de l'imprimante.

Selon un mode de réalisation particulier de l'invention, l'imprimante dispose d'un moyen d'affichage d'un identifiant unique.

Selon un mode de réalisation particulier de l'invention, l'identifiant unique est affiché sous la forme d'un code à barre.

L'invention concerne également un système d'impression pour terminal mobile caractérisé en ce qu'il comporte au moins un serveur d'impression et au moins une imprimante tel que décrit précédemment.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

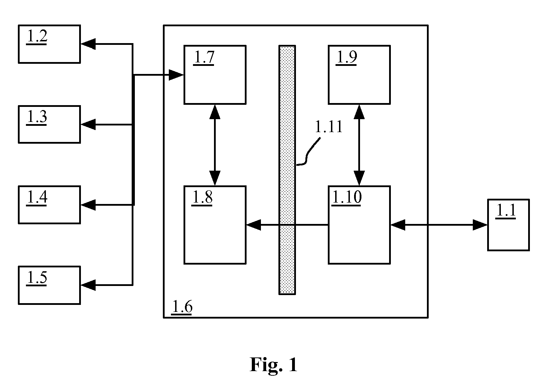

La Fig. 1 illustre l'architecture du système d'impression selon un exemple de réalisation de l'invention.

L'architecture générale de l'invention est illustrée Fig. 1. Il s'agit de permettre à un terminal mobile 1.1 de réaliser l'impression d'un document sur l'une quelconque des imprimantes 1.2 à 1.5. Ces imprimantes peuvent être sur un même réseau local d'entreprise par exemple ou sur des réseaux différents, leur localisation est sans importance au regard de l'invention. Chacune de ces imprimantes doit être connectée à un réseau de communication permettant un accès à un réseau de communication global, typiquement Internet, sur lequel est situé le serveur 1.6 gérant le service d'impression pour terminal mobile. Ce serveur 1.6 doit également être accessible au terminal 1.1. Le serveur 1.6 est typiquement rendu disponible sur Internet. Le terminal 1.1 doit donc disposer d'une connexion de données à Internet. Cette connexion se fait typiquement par un réseau de téléphonie mobile, par exemple conforme à la norme de communication de troisième génération dite 3G. Les terminaux visés par l'invention sont typiquement des téléphones mobiles « intelligents » (smartphone en anglais), mais peuvent également concerner tout type de terminal disposant d'une connexion donnée (data connection en anglais).

Chacune des imprimantes 1.2 à 1.5 établit une connexion sécurisée avec le serveur 1.6. Selon l'exemple de réalisation, le serveur 1.6 héberge un serveur de tunnel sécurisé 1.7 ou VPN (Virtual Private Network en anglais). Chaque imprimante se connecte à ce serveur de tunnel sécurisé 1.7 qui lui attribue une adresse réseau sous la forme d'une adresse IP pour communiquer avec le serveur 1.6. Le tunnel sécurisé utilise l'une quelconque des technologies connues de VPN, par exemple IPSec (Internet Protocol Security en anglais) défini par l'IETF, PPTP (Point to Point Tunneling Protocol en anglais), L2TP (Layer 2 Tunneling Protocol en anglais), ou autres. Toutes ces solutions offrent un chiffrage point à point des communications entre l'imprimante d'une part et le serveur de tunnel d'autre part isolant cette communication des autres communications utilisant le même réseau physique. Tout se passe comme si un lien de communication physique était déployé entre l'imprimante et le serveur.

L'ensemble des imprimantes participant au service d'impression pour terminal mobile et le serveur forment donc un réseau local au travers des liens VPN partageant un adressage cohérent.

Le serveur 1.6 apparaît aux terminaux mobiles comme un service disponible sur Internet. Avantageusement, ce service est implémenté sous la forme d'un service WEB par un serveur WEB 1.10 utilisant typiquement le protocole de communication HTTP (Hyper Text Transfer Protocol en anglais) pour communiquer avec le terminal 1.1. Ce protocole est complété par un langage de programmation côté serveur, tel que par exemple JAVA, PHP, Python ou autre, pour gérer l'intelligence du service sur le serveur.

Le terminal communique donc avec le service d'impression au travers d'un client HTTP standard appelé navigateur, par exemple Internet Explorer, Netscape, Safari, Opera mobile ou autres.

Avantageusement, si l'on désire par exemple facturer le service ou le réserver à certains utilisateurs, le serveur WEB de gestion du service coopère avec une base de données des utilisateurs 1.9. Dans ce cas, l'utilisation du service est soumise à une inscription de l'utilisateur au service et à une authentification lors de l'utilisation. Les techniques de gestion des abonnements et de l'authentification des utilisateurs d'un service WEB sont largement connues et ne seront pas développées plus avant.

Le service WEB 1.10 permet à l'utilisateur via son navigateur de choisir un fichier stocké localement sur son terminal et de le télécharger (upload en anglais) sur le serveur 1.6. Conjointement, une identification de l'imprimante choisie pour l'impression parmi les imprimantes disponibles, dite imprimante cible, est également entrée par l'utilisateur et téléchargée depuis le terminal vers le serveur 1.6. Les moyens d'identifier l'imprimante sont détaillés plus loin. Typiquement, l'utilisateur se connecte au service et reçoit une page de formulaire. Cette page de formulaire lui donne les moyens d'une part de choisir un fichier à imprimer au sein de son terminal. D'autre part, cette page de formulaire lui donne la possibilité d'entrer un identifiant de l'imprimante cible sur laquelle il souhaite imprimer le document. La validation du formulaire provoque la transmission au serveur dudit fichier à imprimer ainsi que de l'identifiant de l'imprimante cible. Ce service WEB constitue donc des moyens de recevoir de la part du terminal d'une part un fichier source à imprimer et d'autre part un identifiant de l'imprimante cible choisie pour l'impression.

Avantageusement, pour des raisons de sécurité, on sépare par un pare-feu 1.11 (firewall en anglais) les modules du serveur formant un réseau local avec les imprimantes, et les modules dédiés au fonctionnement du service WEB proprement dit. Ces différents modules ne sont alors pas dans le même espace d'adressage.

Le fichier à imprimer et l'identification de l'imprimante cible sont alors pris en charge par le module de gestion de l'impression 1.8 sur le serveur. En fonction du type de fichier à imprimer, ce module se charge de transformer le fichier source dans un format d'impression et de le transmettre à l'imprimante cible désignée pour impression au travers du réseau local virtuel reliant le serveur et les imprimantes grâce aux liens VPN établis.

Le service d'impression pour terminaux mobiles décrit ici fait référence à un serveur 1.6. Il est évident qu'en fonction de la dimension du service, ce serveur peut être implémenté sur un ensemble de machines différentes. En particulier chaque module fonctionnel peut être implémenté sur une ou plusieurs machines physiques. Les fonctionnalités pouvant être chacune implémentées sur une ferme de machines gérées en partage dynamique de charge (load balancing en anglais) selon des techniques bien connues de l'homme du métier.

Les imprimantes compatibles avec l'invention disposent de moyens d'établir un tunnel sécurisé avec le serveur. Avantageusement, ces moyens sont déclenchés automatiquement au démarrage de l'imprimante. Avantageusement, le tunnel sécurisé utilise une interface réseau virtuelle et n'empêche pas l'imprimante de fonctionner normalement, hors du cadre de l'invention, sur son réseau local physique. Ainsi, une imprimante utilisée par le système peut d'une part continuer à imprimer pour les utilisateurs locaux de son réseau et indépendamment offrir la possibilité d'imprimer via le service d'impression pour terminal mobile.

Le service d'impression, et plus particulièrement le module de gestion de l'impression, doivent pouvoir gérer d'une part une pluralité de formats de fichiers sources et d'autre part une pluralité de type d'imprimantes cibles. La pluralité des fichiers sources vient de la pluralité des applications permettant de gérer différents types de données. Le type d'un fichier étant typiquement désigné par une extension du nom de fichier de quelques caractères. On peut citer par exemple les fichiers dont le nom possède la forme « xxxx.doc » qui sont conventionnellement des fichiers texte produits par l'application Word de Microsoft (Word et Microsoft étant des marques déposées). L'exemple de réalisation fait le choix de se limiter à un nombre donné de formats de fichiers supportés par le système.

Typiquement dans un environnement classique, un système d'information pour pouvoir utiliser une imprimante donnée doit être doté d'un pilote d'impression dédié à cette imprimante. Toute application gérant l'impression d'un document génère un fichier imprimable et le transmet au pilote spécifique de l'imprimante cible choisie pour la gestion de l'impression.

Selon l'invention, on souhaite pouvoir utiliser tout type d'imprimante. Le choix est fait d'utiliser un format de fichier d'impression générique. De tels formats existent, on peut citer par exemple un format PDL (Page Description Language en anglais), Postscript ou encore PDF (Portable Document Format en anglais). Ces formats sont dits génériques dans le sens qu'ils peuvent représenter un document prêt à imprimer indépendamment de l'imprimante cible choisie.

Le problème à résoudre pour le module de gestion d'impression 1.8 est donc de transformer les formats de fichiers reçus du terminal mobile en un fichier correspondant dans le format générique retenu, le PDL dans l'exemple de réalisation de l'invention pouvant être envoyé à l'imprimante cible sélectionnée pour impression. Pour ce faire, le module de gestion d'impression 1.8 intègre une pluralité d'applications capables de gérer les formats de fichiers choisis et dotés d'un pilote d'impression PDL pour générer le fichier PDL. Typiquement, on utilise les applications de la suite bureautique Office de Microsoft (marque déposée), Acrobat Reader de Adobe (marque déposée) et toute autre application en fonction des types de fichiers que l'on veut pouvoir imprimer. Le fichier reçu du service WEB est donc ouvert par l'application idoine et imprimé par celle-ci sur le pilote PDL pour générer le fichier d'impression générique en PDL correspondant. C'est ce fichier qui est alors envoyé pour impression sur l'imprimante cible choisie.

L'utilisateur doit être en mesure de choisir l'imprimante cible sur laquelle il désire imprimer un document présent sur son terminal portable. Généralement, l'utilisateur est à proximité de cette imprimante, car il doit pouvoir récupérer le résultat de l'impression.

Selon un premier mode de réalisation de l'invention, les imprimantes sont compatibles avec le protocole UPnP (Universal Plug and Play en anglais). Selon ce protocole, les imprimantes intègrent un service d'impression. Ce service d'impression se déclare sur le réseau local virtuel notamment auprès du serveur 1.6. Ce serveur peut alors maintenir une liste des imprimantes disponibles pour le système d'impression. Avantageusement, cette liste se présente sous la forme d'une liste des points de contrôle UPnP des imprimantes en question. Selon UPnP, chaque appareil dispose d'un identificateur unique appelé UUID (Universal Unique Identifier en anglais). Cet identificateur est alors utilisé pour identifier l'imprimante cible. On demande à l'utilisateur d'entrer l'identificateur de l'imprimante cible dans un formulaire HTTP au moment où il désigne aussi le fichier à imprimer. Avantageusement, l'imprimante dispose de moyens d'afficher au sein de son interface graphique ledit identificateur pour le porter à la connaissance de l'utilisateur. Tout autre identificateur unique peut être utilisé, par exemple l'adresse MAC de l'interface réseau de l'imprimante, ou encore son adresse IP au sein du réseau virtuel etc.

Une amélioration de ce système consiste à permettre à l'utilisateur de n'entrer que les 12 derniers caractères de l'identifiant de l'imprimante, ce qui en pratique est suffisant pour déterminer l'imprimante cible.

Une alternative consiste à disposer sur chaque imprimante, sous la forme papier ou pouvant être affiché sur l'écran de l'imprimante, un code barre représentant l'identifiant de l'imprimante. Du fait de la longueur de l'identifiant, un code bidimensionnel, par exemple du type Datamatrix, est utilisé. Une application peut alors être utilisée sur le terminal mobile pour photographier et reconnaître automatiquement ledit code. Ainsi, tout risque d'erreur de transcription est évité.

Dans une variante de réalisation, ce code barre bidimensionnel représente une adresse WEB ou URL (Uniform Resource Locator en anglais) renvoyant au service ou serveur WEB 1.10 et comportant un argument, par exemple appelé boxid, fournissant un identifiant de l'imprimante, tel que son numéro de série.

Avantageusement le système permet de vérifier l'identifiant de l'imprimante cible. Par exemple, un bouton sur le formulaire HTTP d'impression permet de déclencher l'impression d'une page de test. L'utilisation de cette fonction permet à l'utilisateur de vérifier que l'imprimante désignée est bien celle qu'il pense.

Avantageusement, si l'imprimante dispose d'une fonction de lecteur de document (scanner en anglais), cette fonction peut être mise à la disposition du terminal mobile de façon similaire. Par commodité de langage, nous parlerons toujours d'imprimante pour désigner un appareil disposant d'une fonctionnalité de lecture de document et ceci même dans le cas où la fonctionnalité d'impression serait absente. Un formulaire HTTP est mis à la disposition de l'utilisateur pour désigner l'imprimante. Aucun fichier local n'est ici à désigner. En réponse à la commande de lecture, l'imprimante cible désignée lit le document que l'on dispose sur sa vitre. Les données de la lecture sont alors envoyées vers le module de gestion d'impression 1.8 qui dispose d'une application dédiée à la lecture des documents. Typiquement, cette application permet d'encapsuler les données reçues, d'effectuer des opérations classiques telles que de redresser les pages, de nettoyer l'image reçue, éventuellement de réaliser une étape de reconnaissance de caractères. Le fichier image ainsi constitué est alors transmis au serveur WEB 1.10 qui le transmet au terminal sous la forme d'une réponse à la requête HTTP reçue. Le format de fichier utilisé doit être largement connu, on choisit typiquement le format PDF, mais tout autre format de fichier peut être utilisé.

## Revendications

1. Serveur d'impression (1.6) accessible au travers d'un réseau de communication et comportant un serveur de connexion sécurisée (1.7) permettant à des dispositifs (1.2;1.3;1.4;1.5) d'établir des communications sécurisées respectives avec ledit serveur d'impression,
**caractérisé en ce que**, chacun desdits dispositifs comportant une fonction de lecteur de document, ledit serveur d'impression comporte en outre :
- des moyens de recevoir de la part d'un terminal mobile (1.1) se connectant audit serveur une requête comportant un identifiant de dispositif comportant une fonction de lecteur de document choisi pour lire un document à transmettre au terminal mobile ;
- des moyens pour recevoir, en provenance du dispositif choisi au travers d'une dite connexion sécurisée, des données de lecture du document à transmettre au terminal mobile ;
- des moyens pour constituer un fichier image à partir des données de lecture reçues ;
- des moyens pour envoyer ledit fichier au terminal mobile en réponse à ladite requête.

2. Serveur d'impression selon la revendication 1, **caractérisé en ce que** les moyens pour recevoir l'identifiant de dispositif comportant une fonction de lecture de document sont constitués d'un serveur WEB.

3. Serveur d'impression selon l'une des revendications 1 et 2, **caractérisé en ce que** les moyens pour recevoir l'identifiant de dispositif comportant une fonction de lecture de document et les moyens pour constituer un fichier image sont séparés par un pare-feu (1.11).

4. Serveur d'impression selon l'une des revendications 1 à 3, **caractérisé en ce que** les dispositifs comportant une fonction de lecture de document étant conformes à la norme UPnP, l'identifiant de dispositif comportant une fonction de lecture de document est l'identifiant unique d'appareil selon UPnP.

5. Système d'impression pour terminal mobile, **caractérisé en ce qu'**il comporte au moins un serveur d'impression selon l'une des revendications 1 à 4 et au moins un dispositif comportant une fonction de lecture de document et comportant des moyens pour établir une connexion sécurisée avec ledit serveur d'impression.

6. Système d'impression selon la revendication 5, **caractérisé en ce que** chaque dispositif comportant une fonction de lecture de document dispose d'un moyen d'affichage d'un identifiant unique.

7. Système d'impression selon la revendication 6, **caractérisé en ce que** l'identifiant unique est affiché sous la forme d'un code à barre.

8. Système d'impression selon la revendication 5, **caractérisé en ce que** chaque dispositif comportant une fonction de lecture de document dispose d'un code à barre bidimensionnel qui représente une adresse WEB pointant sur un serveur WEB du serveur d'impression et qui comporte un argument correspondant à l'identifiant unique dudit dispositif.

9. Dispositif (1.2;1.3;1.4;1.5) comportant des moyens pour établir une communication sécurisée avec un serveur de connexion sécurisée (1.7) d'un serveur d'impression (1.6) accessible au travers d'un réseau de communication et comportant en outre un serveur WEB (1.10),
**caractérisé en ce que** ledit dispositif comporte une fonction de lecteur de document et comporte en outre :
- un code à barre bidimensionnel qui représente une adresse WEB pointant sur le serveur WEB du serveur d'impression et qui comporte un argument correspondant à un identifiant unique dudit dispositif, le code à barre étant destiné à permettre à un terminal mobile (1.1) de transmettre au serveur WEB une requête comportant l'identifiant unique dudit dispositif ;
- des moyens pour transmettre au serveur d'impression au travers de la connexion sécurisée, des données de lecture d'un document destinées à être transmises audit terminal mobile.
